# EUROPEAN PATENT SPECIFICATION

(11) **EP 4 746 346 B1**
(45) Date of publication and mention of the grant of the patent: **11.11.2026**
(21) Application number: 24213385.8
(22) Date of filing: 15.11.2024
(51) Int. Cl.: H04L 9/40, G06F 11/3668, H04L 43/50, H04L 67/02

(54) **TESTING API CONNECTIVITY IN A CLOUD COMPUTING ENVIRONMENT**
PRÜFUNG DER API-KONNEKTIVITÄT IN EINER CLOUD-COMPUTING-UMGEBUNG
TEST DE CONNECTIVITÉ D'API DANS UN ENVIRONNEMENT INFORMATIQUE EN NUAGE

(43) Date of publication of application: 20.05.2026
(73) Proprietor: Barclays Execution Services Limited, London E14 5HP (GB)
(72) Inventor: BHATT, Ajay, 411014 Pune (IN); PATIL, Akshay, 411014 Pune (IN); KADAM, Kartik, 411014 Pune (IN)
(74) Representative: Carpmaels & Ransford LLP

(56) References cited:
- US-A1- 2021 042 207
- US-A1- 2021 216 288

## Description

### Technical Field

The invention relates to testing API connectivity in a cloud computing environment. In particular, the invention relates to a computer-implemented method, cloud computing environment and system for testing API connectivity in a cloud computing environment so that the API can be used for protected data processing securely.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

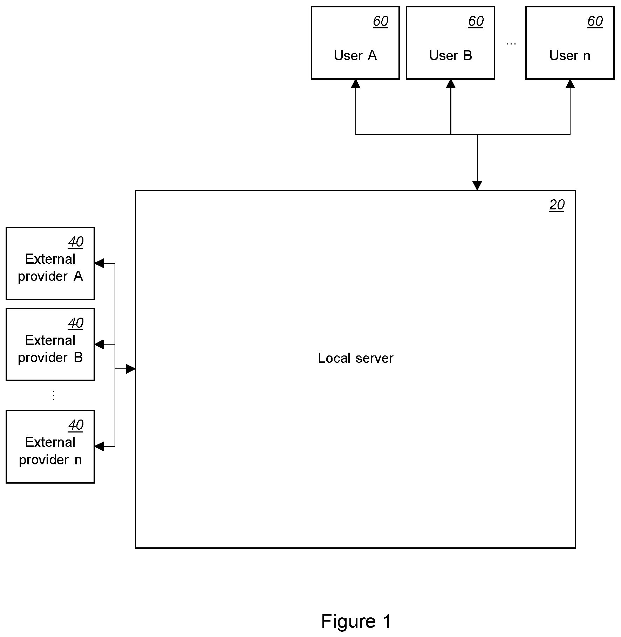

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, systems for processing protected data that transcend the limitations of local servers are needed.

Third party cloud computing environments, for example Amazon Web Services (AWS), are being considered as a way to implement protected data processing. However, there are a myriad of technical challenges when implementing protected data processing in such environments. One such challenge is in the testing of new applications that execute within the environment or new components (such as domains) that are being implemented in the cloud computing environment. The environment typically cannot be taken offline for testing of such applications and components as it otherwise needs to actively process protected data. This means that the scope for testing new applications and components within the environment itself is limited. Yet, testing is crucial to ensure that the application or component is functioning as intended and to ensure that there is no unintended leakage of the protected data from the cloud computing environment.

When implementing new applications or components within cloud computing environments, new Application Programming Interfaces (APIs) typically need to be developed. APIs serve as a crucial interface that facilitate interaction between distributed cloud services, applications, and infrastructure components. APIs utilise standardised protocols to enable seamless communication among various processing engines, domains, and other components of cloud computing environments. Moreover, APIs facilitate the automation of various processing tasks by allowing applications to programmatically access endpoints in the cloud computing environment. This is particularly important in cloud computing environments which rely on microservices or serverless architectures, where APIs are especially prevalent to ensure that various microservices can communicate efficiently and effectively, regardless of the underlying infrastructure.

In view of the prevalence of APIs in cloud computing environments, and the limited scope for testing of new applications and components within the environment (for example, to ensure that there is no leakage of protected data) that necessarily use such APIs, a need has emerged for a way of testing API connectivity in cloud computing environments.

US 2021/0216288 A1 discusses operations that include creating an object-oriented software platform by performing a textual analysis of a documentation corpus associated with a set of APIs. The operations further include generating a set of API call objects for an API endpoint of a first API of the set of APIs and constructing a set of natural language descriptors corresponding to the set of API call objects based on the textual analysis. The operations further include generating a set of business objects. Each business object encapsulates conditions applicable on a set of input/output parameters associated with a corresponding API call object of the set of API call objects. The operations further include constructing a software package that encapsulates the set of API call objects, the set of natural language descriptors, and the set of business objects.

US 2021/042207 A1 discusses techniques to implement application programming interface (API) security validation testing for system integration testing (SIT) in a continuous integration environment. For example, a SIT tool detects a change in master code associated with an application comprising a plurality of microservices and an API gateway to route client API requests to the microservices of the application. The SIT tool obtains a listing of API endpoints exposed by the microservices of the application. The SIT tool performs an automated API security test validation process to determine whether an API security test file has been created for each API endpoint in the listing of API endpoints. The SIT tool fails the API security test validation process in response to determining that an API security test file has not be created for one or more API endpoints in the listing of API endpoints.

### Summary

The present invention is defined by the independent claims, with further optional features being defined by the dependent claims.

In a first aspect of the invention, there is provided a computer-implemented method for testing API connectivity in a cloud computing environment, wherein the cloud computing environment comprises an API testing utility and a memory communicatively coupled to the API testing utility, wherein the API testing utility is configured to send requests to and receive data from an API, and wherein the cloud computing environment is communicatively coupled to a credential manager system and an authorisation token system, the method, at the API testing utility, comprising: receiving request configuration data from the memory, wherein the request configuration data comprises authorisation configuration data and a target endpoint identifier; retrieving credential data from the credential manager system based on the authorisation configuration data; retrieving the authorisation token from the authorisation token system based on the credential data; generating a dummy request, based on the request configuration data, wherein the dummy request comprises the authorisation token; sending the dummy request to a target endpoint of the API based on the target endpoint identifier; receiving a status code from the API in response to the dummy request; determining dummy request success based on the status code; and if the status code indicates dummy request success, outputting a success notification.

In this way, the API testing utility of the invention is able to automatically output a notification, for instance to the developer of the API, indicating that the API has been set up correctly, without using any of the protected data that the cloud computing environment processes. Notably, in cloud computing environments for processing protected data, API endpoints can be set up to require authorisation tokens for security purposes, including identifying the user or system making the API request so that only API requests from authorised users or systems are made. Accordingly, the API testing utility of the invention is configured to obtain such an authorisation token, and to include the authorisation token in the dummy API request that is sent to the target endpoint. This ensures that not only issues with the endpoint setup (e.g., wrong endpoint URL due to a typographical error or wrong version, IP whitelisting not performed, etc.) and the communication path (e.g., certificates not imported into a trust store, etc.) are automatically identified, but so too are issues with the setup of the authorisation token (e.g., authorisation server URL incorrectly configured, authorisation system not whitelisted by the endpoint, etc.). In order to obtain such authorisation tokens, appropriate credential data, such as a password, is required. It is not practical nor desirable to store this credential data in the API testing utility itself as this significantly increases security risks, especially as credential data may need to be stored in the API testing utility for all the different components of the cloud computing environment. Including the credential data in the request configuration data is similarly not desirable from a security perspective. Accordingly, the API request utility is configured to obtain the appropriate credential data securely from a credential manager system. Because the API request utility of the invention is configured in this way, it is flexible and able to test API connectivity amongst different components (e.g. processing engines, domains) and for different applications of a cloud computing environment.

In embodiments, the status code is indicative of successful response, redirection, client error response or server response. In such embodiments, determining dummy request success based on the status code may comprise determining dummy request success when the status code is indicative of successful response, or indicative of redirection, client error response or server response. In such embodiments, determining dummy request success based on the status code may comprise determining dummy request failure when the status code is indicative of redirection, client error response or server response. Determining whether a dummy API request is successful or has failed based on response status codes in this way allows for clear, standardised, and efficient identification of the outcome (i.e. success/fail). Such predefined codes may be used to quickly obtain the testing result, enable easy interpretation (especially if the code itself is output to the development), ensure consistent error handling, and streamlined debugging across various components of the cloud computing environment. Notably, redirection, client error response and server response do not necessarily mean that the API being tested has failed. In many circumstances, it is usual not to receive a successful response for an otherwise correctly configured API because the dummy API request does not correspond to an actual API request, primarily because there is no protected data in the dummy API request.

In embodiments, receiving a status code for the dummy request from the API comprises a HTTP response status code. In such embodiments, the HTTP response status code may be: between 200 and 299, which is indicative of successful response; between 300 and 399, which is indicative of redirection; between 400 and 499, which is indicative of client error response; or between 500 and 599, which is indicative of server response. HTTP response codes are used because they provide a standardised set of codes that clearly communicate the outcome of an HTTP request. These codes are consistent across different systems and applications, enabling the API testing utility to quickly diagnose issues, automate responses, and ensure interoperability with different components of the cloud computing environment. Additionally, HTTP codes cover a broad range of scenarios (success, client errors, server errors), making them versatile. In such embodiments, determining dummy request success based on the status code comprises determining dummy request success when the HTTP response status code is any one of 200, 300, 304, 400, 408, 404, 500, 502, and 504. In such embodiments, determining dummy request success based on the status code comprises determining dummy request failure when the HTTP response status code is any one of 206, 301, 302, 303, 307, 308, 401, 403, 404, 405, 406, 407, 505 and 503. It has been observed that, in the context of a cloud computing environment, many HTTP response codes not being indicative of a successful response (i.e. codes other than 200-299) still actually indicate that the API has been set up correctly. A list of HTTP response codes that do indicate that the API has been set up correctly and a list of HTTP response codes that do not indicate that the API has been set up correctly have been identified.

In embodiments, the method further comprises: if the status code indicates dummy request failure, outputting a failure notification, optionally outputting the status code. Outputting a failure notification in this way with the status code provides immediate feedback on what went wrong, enabling quicker diagnosis and resolution of issues with the API. The response code may help a developer to pinpoint the type of error (e.g., an authentication issue).

In embodiments, the memory comprises a configuration file, wherein receiving request configuration data from the memory comprises reading from the configuration file. The configuration file provides a way for the developer that is using the API testing utility to configure the API testing utility for the particular API target endpoint that is being tested. In addition to being able to specify the target endpoint, the developer may specify any details required to obtain the credential data for the authorisation token system from the credential manager system. The developer may also specify certain (non-secret) credential data relating to the authorisation token system (e.g. username). This is the only aspect of the API testing utility that requires manual set up, and using this approach ensures that the core functionality of the utility remains robust and unchanging, reducing the risk of introducing bugs or errors, while the configurable part can be easily adapted to different components of the cloud computing environment or API endpoints without altering the entire utility.

In embodiments the memory comprises a trust store file, wherein receiving request configuration data from the memory comprises reading from the trust store file. Many commonly used communication protocols, such as SSL (Secure Sockets Layer), require certificates which are stored in a trust store. Accordingly, the trust store file is a repository of one or more certificates that are used to validate the certificates presented by the target endpoint of the API during secure connections.

In embodiments, the target endpoint of the API is within the cloud computing environment, optionally wherein the target endpoint is within a processing engine or a domain of the cloud computing environment. In such embodiments, the target endpoint may be a processing module, a database, or may be an event-driven data stream. As discussed herein, APIs can be used in many different scenarios within cloud computing environments, and for many different components (e.g. different domains, processing engines) of the cloud computing environment. The API testing utility is configured such that it is agnostic to different components of the cloud computing environment.

In embodiments, testing API connectivity comprises testing a GET API request. GET requests are typically used to retrieve data without causing any side effects or changes to the target endpoint. This means that testing GET calls is generally safe, as it does not risk altering data or triggering unintended actions, which is particularly desirable in cloud computing environments that are processing protected data. Additionally, GET requests are often the most frequent and critical part of API functionality, so testing such requests covers a significant portion of the API reliability.

In a second aspect of the invention, there is provided a cloud computing environment comprising: an API testing utility configured to send requests to and receive data from an API and to perform the method of the first aspect of the invention; and a memory communicatively coupled to the API testing utility, wherein the memory is configured to store request configuration data, wherein the cloud computing environment is communicatively coupled to a credential manager system and an authorisation token system.

In a third aspect of the invention, there is provided a system comprising: the cloud computing environment of the second aspect of the invention; a credential manager system communicatively coupled to the cloud computing environment; and an authorisation token system communicatively coupled to the cloud computing environment.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4 shows an example architecture of a cloud computing environment for implementing the invention.
Figure 5A and Figure 5B depict a cloud computing environment for testing connectivity of an API in accordance with the invention. The components used during runtime are shown in Figure 5A and the components used during deployment are depicted in Figure 5B.
Figure 6 depicts a flow diagram demonstrating an API connectivity testing method of the invention.
Figure 7 depicts a flow diagram demonstrating a method of deploying the API connectivity testing method of the invention.
Figure 8 depicts an AWS-based cloud computing environment for testing connectivity of an API in accordance with the invention.

### Detailed Description

Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, protected data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 60 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

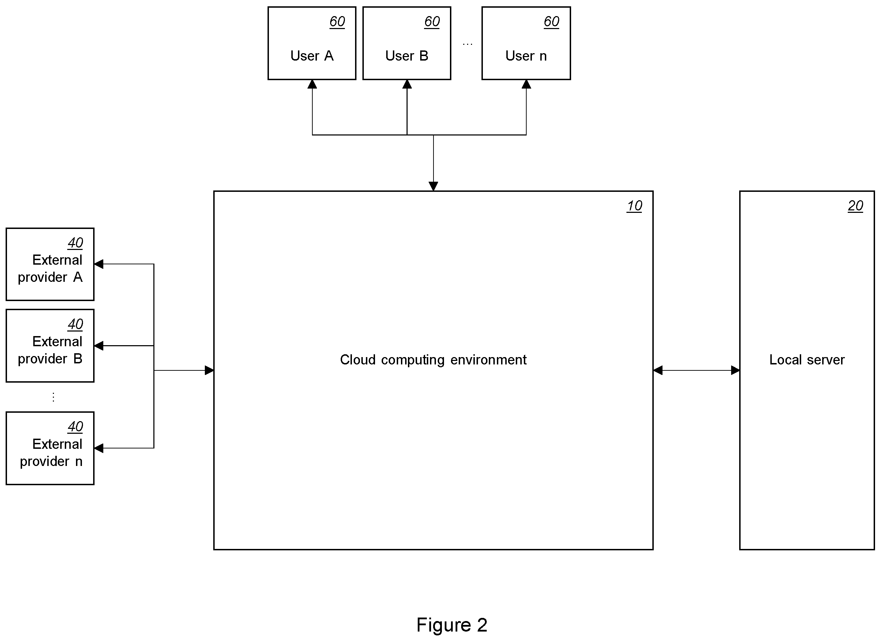

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

Cloud computing environment 10 uses event-driven applications, where data is processed as events. In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

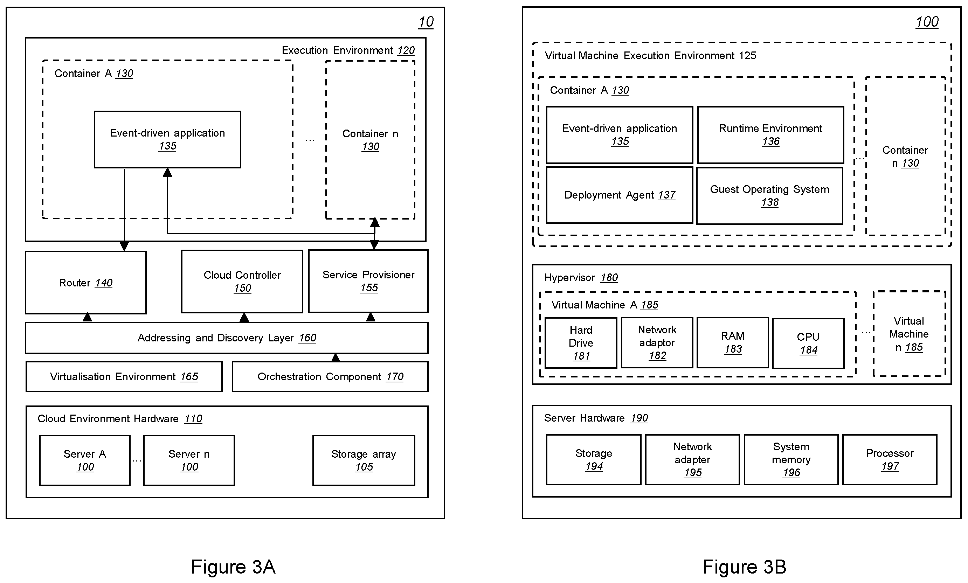

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of platform for providing a virtual machine execution environment 125 that supports containers 130. For each container 130 (or docker image), hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

### Cloud Computing Environment Architecture

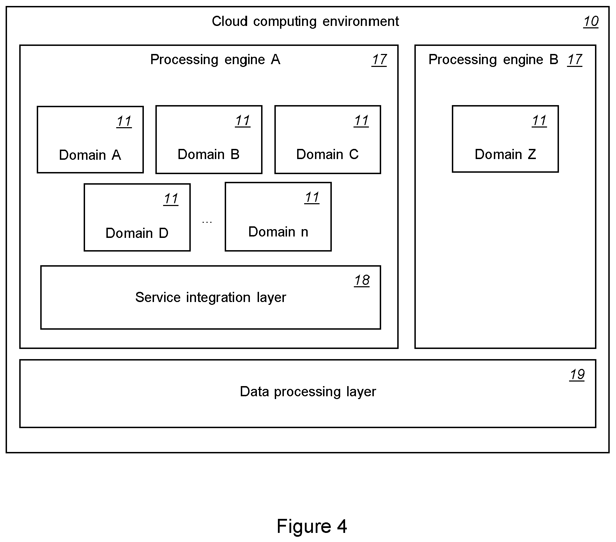

Figure 4 depicts an example of cloud computing environment 10 architecture in which the present invention may be implemented.

As shown in Figure 4, the cloud computing environment 10 contains one or more processing engines 17. Preferably, there are a plurality of processing engines 17. Figure 4 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

Each domain 11 contains one or more processing modules. The processing modules are event-driven and can be used within one or more event-driven applications 135. Put another way, the processing modules are agnostic to the event-driven applications 135, and therefore may be combined with other components to easily create a new event-driven application 135. Accordingly, processing modules may also be referred to as a microservice. This flexibility enables the cloud computing environment 10 to adapt to changing requirements and support a wide range of event-driven applications 135. When the cloud computing environment 10 is an AWS environment, each of the processing modules may be hosted on AWS ECS (Container) running on EC2 or AWS Fargate.

In some examples, the domain 11 may include one or more data streams that are configured to stream protected data. These data streams are event-driven and may have incoming and outgoing connections to various components within the cloud computing environment 10 and outside of the cloud computing environment 10. For instance, within the cloud computing environment 10, the data streams may be used to communicate data to and/or from one or more processing modules, one or more domains 11, one or more processing engines 17, one or more databases, and the like. Outside of the cloud computing environment 10, the data streams may be used to communicate with local server 20 and/or external provider systems 40. In an AWS environment, such data streams may be provided by Amazon Kinesis, which is a particular type of scalable and durable real-time data streaming application, or another data streaming application.

Each domain 11 may also contain one or more domain databases. Domain databases may be used for different reasons, such as to log event processing occurring within the domain 11. In some examples, a database is configured to store protected data. The database may be a NoSQL database, such as DynamoDB, which provides a flexible and scalable approach for storing and managing data. The use of a NoSQL database ensures that the cloud computing environment 10 can efficiently handle large volumes of data and support a wide range of applications.

The one or more processing modules, data streams, and domain databases work together to provide a scalable, secure, and efficient domain 11 for processing and managing protected data.

In some examples, the domain 11 may be sub-divided into one or more cloud-based accounts 24. Any one or more of the processing modules, data streams and domain databases may be associated with a particular cloud-based account 24. Alternatively, it may be that none of the processing modules, data streams and domain databases is associated with the particular cloud-based account 24. The domain may comprise one or more processing modules, data streams, and/or domain databases that are not associated with any cloud-based account 24.

Referring back to Figure 4, processing engine 17 may contain a service integration layer 18. The service integration layer 18 is responsible for communications with local server 20. In particular, the service integration layer 18 enables standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 4, the cloud computing environment 10 also includes a data processing layer 19. The data processing layer 19 provides a common aggregation point for cloud computing environment 10 for providing data to various data platforms, for further analysis and/or manipulation.

### API Testing Utility

An Application Programming Interface (API) is a standardised interface that is used to allow an upstream system to request and exchange data with a downstream system. APIs work by sending HTTP requests from the upstream system to specific endpoints in the downstream system, typically using methods like GET, POST, PUT, or DELETE. These requests contain instructions in a format such as JSON or XML. The downstream system receiving the request processes it according to predefined protocols and performs the corresponding action, such as retrieving data. The downstream system then sends a response back to the upstream system, which includes the results of the request, such as status codes or data payloads.

In the context of cloud computing environments, such as cloud computing environment 10 discussed with respect to Figure 2, Figure 3A, Figure 3B and Figure 4, APIs enable interaction between different components of the cloud computing environment. As such, the use of APIs is very prevalent within cloud computing environments, especially cloud computing environments that use modular architecture as exemplified by the architecture of the cloud computing environment 10 of Figure 4, with its multiple domains 11 and processing engines 17.

APIs are used by one or more applications in the cloud computing environment 10. In particular, APIs facilitate the automation of various processing tasks by allowing the applications, such as event-driven application 135, to programmatically access endpoints in the cloud computing environment 10, typically resulting in the sending and/or receiving of protected data. Such endpoints may be within a domain 11, a processing engine 17, a service integration layer 18, or a data processing layer (all of which are depicted in the cloud computing environment 10 of Figure 4). Such endpoints may include a processing module (or microservice), a database, or an event-driven data stream. The invention provides an API testing utility for testing these APIs, i.e. APIs that have endpoints in the cloud computing environment 10.

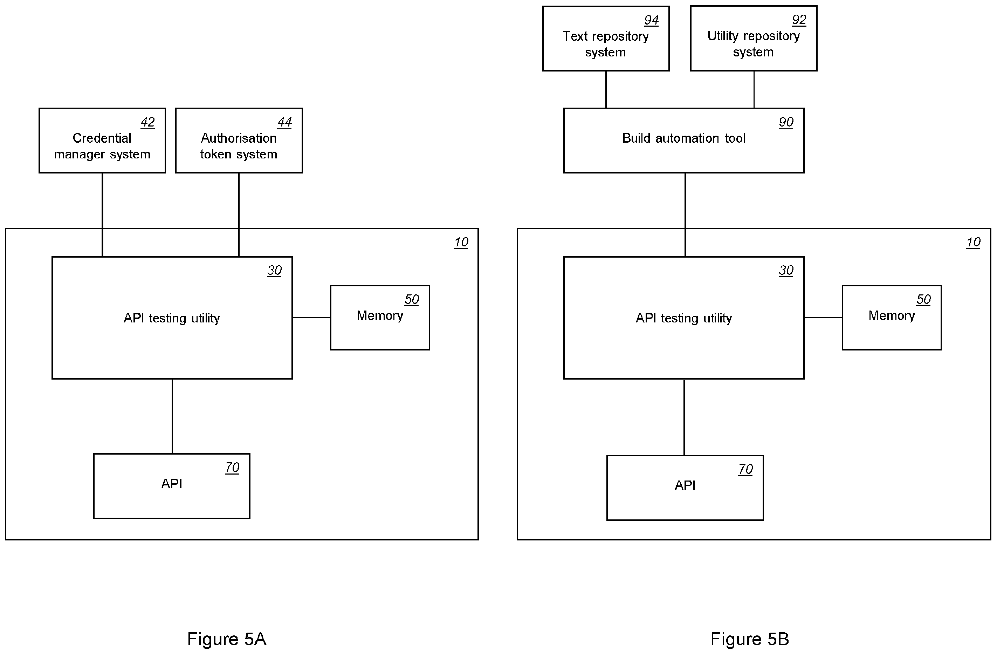

Reference is now made to Figure 5A and Figure 5B which depict a cloud computing environment 10 in which an API testing utility 30 is provided for testing API 70. The API testing utility 30 may be implemented within any component of cloud computing environment 10 shown in Figure 4. Preferably, API testing utility 30 is implemented in the component of cloud computing environment 10 from which the API call is made (as required by a particular application). Accordingly, API testing utility 30 may be implemented in a particular domain 11 and/or processing engine 17 from which the API is to be called.

The endpoints of API 70 are configured to require authorisation tokens. Authorisation tokens ensure that only authorised systems and users can access the API, thereby protecting protected data and cloud resources from unauthorised access. Additionally, using authentication tokens allows for better tracking of API usage, helping to monitor and prevent potential security breaches. The tokens may also be configured with specific permissions, providing fine-grained control over what actions can be performed by different users or systems, aligning with best practices for secure API management. An example of an authorisation token which the endpoints may require is a JSON web token (JWT). A further example of an authorisation token is a TIAA token, in which case the endpoint or API 70 can be referred to as TIAA-enabled. Like JWTs, TIAA tokens use a JWT tokenisation mechanism. Where TIAA tokens are discussed herein, other types of JSON web tokens may be used.

The API testing utility 30 establishes communicative coupling to the API 70 via a secure communication protocol such as SSL. The API testing utility 30 is configured to send requests to and receive data from API 70. In particular, the API testing utility 30 is configured to send GET requests from API 70 and receive responses to GET requests from the API 70. The API testing utility 30 tests the API using GET requests to ensure that any protected data being processed by the cloud computing environment 10 is not altered by the testing. This is necessary because for certain critical cloud computing environments it is not possible to take the environment offline for testing purposes, so the tests have to be done while the cloud computing environment is live and processing protected data.

Notably, the API testing utility 30, does not fetch or store any protected data from the API responses. The purpose of the API testing utility 30 is to test that the API and associated systems (for example, the wider downstream system of the endpoint, as well as the credential manager system and authorisation token system discussed elsewhere herein) have been set up correctly.

Referring back to Figures 5A and Figure 5B, a memory 50 is shown within cloud computing environment 10. Memory 50 may take the form of object storage, file storage or block storage. Additionally or alternatively, memory 50 may be implemented by using a known cloud-based storage service. For example, the memory 50 may be an S3 bucket, which is the object storage service S3 (Amazon Simple Storage Service) provided by AWS.

Memory 50 is communicatively coupled to the API testing utility 30. Typically, the memory 50 is provided in the same domain 11 and/or processing engine 17 as the API testing utility 30. This allows the API testing utility 30 to read from the memory 50 using a generic file path that does not have to specify which domain 11 and/or processing engine 17 is to be read from.

Memory 50 is implemented outside of the virtual machine cluster, for example the ECS instance, that the API testing utility 30 is implemented within but still within the same domain 11 and/or processing engine 17. The memory 50 may be given a default name such as api-connection-utility-configs or {domain}-api-connection-utility-configs-{account-id} that the API testing utility 30 is programmed to use in order to read from the memory 50.

The main function of the memory 50 is to store request configuration data. The request configuration data includes at least authorisation configuration data and one or more target endpoint identifiers. The authorisation configuration data is used by the API testing utility 30 to ensure that the API call being made has the appropriate authorisation (i.e. by being used to retrieve an authentication token). The one or more target endpoint identifiers include target endpoints of the API that the developer would like to test with the API testing utility 30. The target endpoint identifier is typically a URL. The URL may contain a specific account identifier within it to a dummy account. The dummy account is used to ensure that the API requests used by the API testing utility 30 do not fetch any protected data.

More completely, the request configuration data stored in memory 50 includes configuration data for API testing utility 30 for the particular API 70 that is being tested and certificates relating to the secure communication protocol that the API testing utility 30 and the API 70 use to communicate.

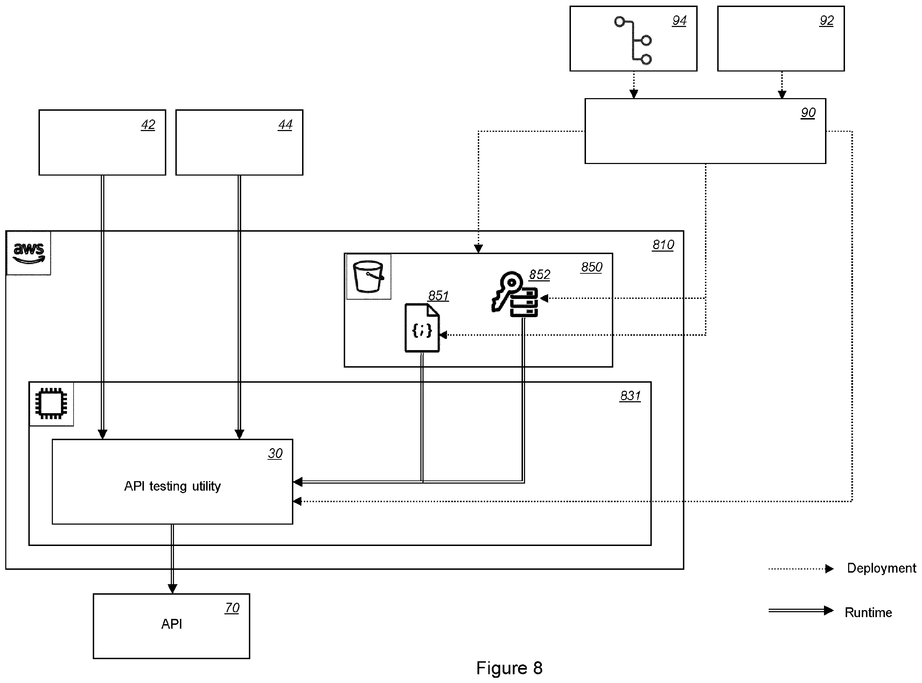

Configuration data for API testing utility 30 for the API 70 is stored in a configuration file (shown as configuration file 851 in Figure 8). Keeping configuration data within the configuration file 851 allows the API testing utility 30 to be suitable for deployment in all domains 11 and/or processing engines 17 of the cloud computing environment 10 (as well as other components discussed with respect to Figures 3A, 3B and 4), without having to re-code the utility itself.

Configuration file 851 contains one or more target endpoint identifiers (i.e. one or more URLs (Uniform Resource Locators) to target endpoints), non-secret credential data relating to the authorisation token system, and data for obtaining secret credential data from the credential manager system (also referred to herein as authorisation configuration data). Non-secret credential data relating to the authorisation token system may include a username and system identifier. Data for obtaining secret credential data from the credential manager system 42, i.e. authorisation configuration data, may include an authorisation URL, a secret retrieval URL and a role identifier. Other data may be present in the configuration file 851 such as the domain 11 in which the API 70 is located and API headers. Additionally or alternatively, configuration file 851 may contain a reference to a trust store file 852 (shown in Figure 8 and discussed further below) and a trust store public key. Configuration file 851 may be in JSON format and is given a default name such as /downstream-api-config.json for the API testing utility 30 to reference. An example configuration file 851 is provided below.

```
 [
   {
     "downstream": "Domainl",
     "APIHeaders": {
       "Channel-ID": "ChannelID",
       "System-ID": "SystemID"
     },
     "endpoint": [
       "https://d1-
 services.example.com:2363/domainl/vl/accounts/dummy account/testl",
       "https://dd-
 services.example.com:2363/domainl/vl/accounts/dummy account/history/te
 st2"
     ],
     "tiaaSystemId": "sysTIAAASDDLP",
     "tiaaClientId": "CLIENTID",
     "sslCertTrustore": "upstream-truststore.jks",
     "sslCertTruststorePublicKey": "Y2hhbmdlaXQ=",
     "csmDetails": {
       "authURL":
 "https://vault.example.com:8200/v1/AD/auth/jwt/login",
 "secretURL":"https://vault.example.com:8200/v1/AD/intranet/static-
 cred/aaaaaa-bbbb-4ec1-9250-afeab4b5b5f4__1__systiaappe",
       "role": "aaaaaa-bbbb-4ec1-9250-afeab4b5b5f4__1__ecs-service-
 role"
 } } ]
```

Certificates relating to the secure communication protocol that the API testing utility 30 and the API 70 use to communicate are stored in a trust store file (shown as trust store file 852 in Figure 8). Certain communication protocols, such as SSL, require certificates. Accordingly, the trust store file 852 is a repository of one or more certificates that are used to validate the certificates presented by the target endpoint of the API during secure connections. The certificates may be public certificates. In certain implementations, the trust store file 852 may be in Java KeyStore format. The trust store file 852 may be given a default name such as Trust-store.jks so that it can be accessed by the API testing utility 30 without changing the utility code. Additionally, as mentioned, configuration file 851 may contain a reference to trust store file 852 and public key for a certificate in the trust store file 851.

Referring back to Figure 5A, the cloud computing environment 10 is communicatively coupled to a credential manager system 42 and an authorisation token system 44. In certain implementations, the credential manager system 42 and authorisation token system 44 are provided by external providers 40 from outside of the cloud computing environment 10. In these implementations, the credential manager system 42 and the authorisation token system 44 are communicatively coupled to the cloud computing environment 10 in the same way as any external provider 40, as discussed previously. However, one or both of these systems may also be provided within the cloud computing environment 10, for instance by a dedicated cloud service. For example, the credential manager system 42 may be replaced with AWS Secret Manager, but this is not preferred as this requires secrets to be stored within a third-party cloud environment.

Credential manager system 42 is designed to securely retrieve credential data based on authorisation configuration data in the configuration file 851. The credential manager system 42 is configured to receive specific configuration data, including an authentication URL, a secret retrieval URL, and a role identifier, as input. The credential manager system 42 is configured to authenticate the request and retrieve secret credential data, The secret user credential may be system user credentials for the authorisation token system 44 (for example a username and password). In particular, the authentication URL is used by the credential manager system 42 to authenticate the API testing facility 30 requesting access to the credential data, for example using a token. It typically points to an endpoint on an authentication service of the credential manager system 42. The role identifier defines and enforces access control and permissions at the credential manager system 42 when the API testing utility 30 requests the credential data.

The secret retrieval URL is used by the credential manager system 42 to retrieve the secret credential data from secure storage or vault. It typically points to a specific endpoint within a secrets management service where the requested credential is stored. Additional information in the configuration data relating to the authorisation token system 44 may also help the credential manager system 42 to retrieve the correct secret credential data.

The authorisation token system 44, from the perspective of the API testing utility 30, is responsible for providing the authorisation token based on the credential data. More generally, the authorisation token system 44 is designed to generate secure authentication tokens (also sometimes referred to as access tokens) for authorising interactions with the API 70. In one particular embodiment, such as with TIAA services, the authorisation token system 44 receives credential data including secret credential data from the credential manager system 42 and other credential data such as a system identifier and a client identifier. Upon receiving these inputs, the authorisation token system 44 verifies the credential data, ensuring they match the expected parameters. The authorisation token system 44 then generates a time-sensitive authorisation token that encapsulates the access rights of the API testing utility 30. The authorisation token system 44 may be a TIAA system, in which case the authorisation token is a TIAA token.

As mentioned previously, Figure 5A depicts the cloud computing environment 10 when the API testing utility 30 is being run. Before running the API testing utility 30, other components are used to deploy the API testing utility 30, as shown in Figure 5B. In particular, a build automation tool 90, utility repository system 92, and text repository system 94 are used to deploy the API testing utility 30. Each of the build automation tool 90, utility repository system 92, and text repository system 94 may be implemented in the cloud computing environment 10 by a cloud service, or may be implemented external to the cloud as external providers 40. The build automation tool 90 is communicatively coupled to the cloud computing environment 10. The utility repository system 92 and text repository system 94 are communicatively coupled to the build automation tool 90, and may optionally be communicatively coupled to the cloud computing environment 10.

The build automation tool 90, such as Jenkins, automates the development of API testing utility 30. In response to developer requests, the build automation tool 90 initiates and manages deployment tasks, referred to as Jenkins jobs. These jobs are dynamically created based on data retrieved from the utility repository system 92 and the text repository system 94. The utility repository system 92 hosts binary artifacts and dependencies needed for building the utility 30, while the text repository system 94 includes code (or other text) for the configuration file 851 and trust store file 852. Jenkins automates the process of deploying the API testing utility 30, ensuring that builds of the API testing utility 30 for different domains 11 and/or processing engines 17 in the cloud computing environment 10 are consistent, reproducible, and aligned with the latest updates in the codebase.

The utility repository system 92 is responsible for storing a compiled version of the code for the API testing utility 30, which may be stored as a jar file. An example utility repository system 92 that is compatible with the API testing utility 30 is Nexus.

Text repository system 94 is used to store text or code for API testing utility 30. In particular, the text repository system 94 stores the request configuration data, including the configuration file 851 and the trust store file 852. An example test repository system 94 that may be used is GitHub.

### Method of Testing API Connectivity

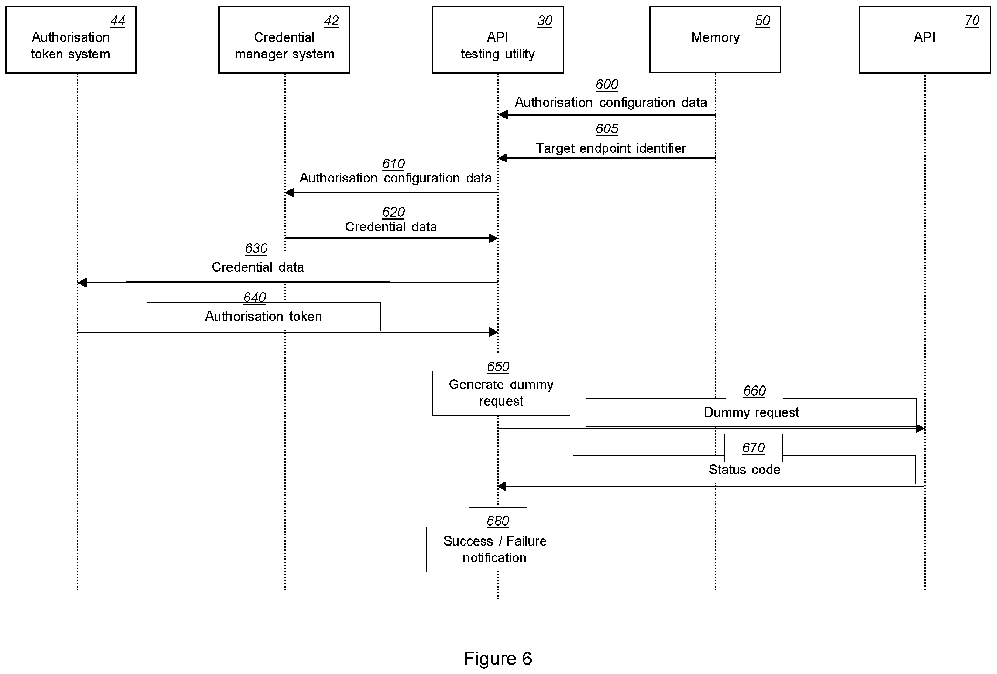

A method of testing API connectivity in cloud computing environment 10 using API testing utility 30 is described with respect to Figure 6. As shown in Figure 5A and Figure 6, when running the API testing utility 30 for testing API 70 in the cloud computing environment 10, memory 50, credential manager system 42 and authorisation token system 44 are involved.

As shown in Figure 6, the method for testing API 70, described from the perspective of the API testing utility 30, comprises the following steps: receiving request configuration data from the memory 50, wherein the request configuration data comprises authorisation configuration data and a target endpoint identifier (steps 600 and 605); retrieving credential data from the credential manager system 42 based on the authorisation configuration data (steps 610 and 620); retrieving the authorisation token from the authorisation token system 44 based on the credential data (steps 630 and 640); generating a dummy request, based on the request configuration data, wherein the dummy request comprises the authorisation token (step 650); sending the dummy request to a target endpoint of the API 70 based on the target endpoint identifier (step 660); receiving a status code from the API 70 in response to the dummy request (step 670); determining dummy request success based on the status code and if the status code indicates dummy request success, outputting a success notification (step 680). Alternatively, if the status code indicates dummy request failure, outputting a failure notification (step 680).

Each of the steps in Figure 6 will now be described in further detail.

First, in steps 600 and 605, the API testing utility 30 receives request configuration data from the memory 50. This request configuration data includes at least authorisation configuration data (received in step 600) and one or more target endpoint identifiers (received in step 605). This is performed by the API testing utility 30 by reading from the configuration file 851 and trust store file 852 using known paths of each of the files. The reason these paths are known is because default names are used for each file, for example api-connection-utility-config-{env}.json and trust-store- {env} . jks.

Next, in steps 610 and 620, the API testing utility 30 retrieves credential data from the credential manager system 42 based on the authorisation configuration data. In particular, at step 610, the API testing utility 30 sends a request for the credential data from the credential manager system 42 using the authorisation configuration data. The authorisation configuration data may, in some implementations, contain an authentication URL, a secret retrieval URL, and a role identifier. For example, the authorisation configuration data may be as follows:

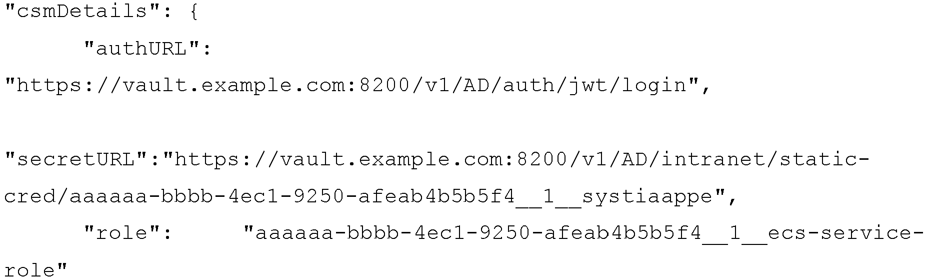

In response, at step 620, the credential manager system 42 sends credential data to the API testing utility 30. Such credential data may include system user credentials for the authorisation token system 44. In particular, the credential manager system 42 authenticates the request from the API testing utility 30 and retrieves secret credential data (for example a password or a secret TIAA credential). The authentication URL is used by the credential manager system 42 to authenticate the API testing facility 30 requesting access to the credential data. For example, the authentication URL may be used by the credential manager system 42 to request a token, such as a BAM token, which is specific to the system user of a particular domain 11. Secret retrieval URL is used by the credential manager system 42 to retrieve the secret credential from a secure storage or vault. For example, based on the token, the Secret retrieval URL will return system user credentials for the authorisation token system 44. The role identifier defines and enforces access control and permissions at the credential manager system 42 when the API testing utility 30 requests the credential data. This may be used in generating the aforementioned token.

Once the credential data has been retrieved by the API testing utility 30, the next steps 630 and 640 are to retrieve the authorisation token from the authorisation token system 44 based on the credential data. In particular, in step 630, the authorisation token system 44 generates a secure authentication token for authorising interactions with the API 70. This is generated in response to receiving a request from the API testing utility 30 that contains the (secret) credential data retrieved from the credential manager system 42, as well as non-secret credential data from the configuration file 851. In some implementations, such as when using TIAA as the authorisation token system 44, the API testing utility 30 sends secret credential data from the credential manager system 42 and optionally other credential data such as a system identifier and a client identifier from the configuration file 841. Secret credential data may include a username and password for the authorisation token system 44.

Next, in step 650 the API testing utility 30 generates a dummy request based on the request configuration data. In particular, the dummy request includes the authorisation token retrieved in step 640. The authorisation token is included in the request header. Additionally, the dummy request includes the target endpoint identifier for each endpoint that is being tested from the configuration file 851. The dummy request that is generated is a GET request. The dummy request may be to a particular account within a particular domain 11. In these instances, the account is a dummy account to ensure that the dummy request does not call any protected data from an actual 'live' account.

Once generated, the dummy request is sent in step 660 to a target endpoint in the API based on the target endpoint identifier. In particular, the API testing utility 30 sends a GET request to the target endpoint URL. For this to happen, a secure connection is first established between the API testing utility 30 and the API 70 using SSL. This involves a handshake process between the API testing utility 30 and the API 70 using the certificate in the trust store file 852 and a trust store public key (i.e. a public key for SSL) from the configuration file 851.

Before sending the status code the target endpoint determines whether to validate the request based on the authorisation token. If validated, at step 670, the API testing utility 30 receives a status code from the API in response to the dummy request. The status code is a HTTP response code. Such response codes are well known in the art. Accordingly, the received status code will be indicative of one of successful response (HTTP response codes 200-299), redirection (HTTP response codes 300-399), client error response (HTTP response codes 400-499) or server response (HTTP response codes 500-599).

Next, at step 680 the API testing utility 30 determines dummy request success based on the status code. If the status code indicates dummy request success, then the API testing utility 30 outputs a success notification. Alternatively, if the status code indicates dummy request failure, the API testing utility 30 outputs a failure notification. The determination is performed by the API testing utility 30 using a predetermined success/failure outcome for each status code. The predetermined responses may be stored in a look-up table or the like. The look-up table may be customisable for each domain 11 so that each domain can implement its own criteria for success and failure outcomes. The API testing utility 30 retrieves the corresponding response for the status code that has been received. Notably, redirection, client error responses and server responses do not necessarily mean that the API 70 being tested has failed. In many circumstances, it is usual not to receive a successful response for an otherwise correctly configured API because the dummy API request does not correspond to an actual API request, primarily because there is no protected data in the dummy API request and/or the request is to a dummy account. In particular, in the context of cloud computing environment 10, many HTTP response codes not indicative of a successful response (i.e. HTTP status codes other than 200-299) still actually indicate that the API 70 has been set up correctly.

Whilst the HTTP responses that correspond with success and failure outcomes may be customised for each domain 11, suggested HTTP responses and corresponding outcomes are provided herein. These suggested HTTP response and outcomes may be the default, i.e. before any customisation takes places.

For HTTP responses between 200-299, which are indicative of a successful response from the target endpoint, the API testing utility 30 generally determines that the dummy request has been successful (as would be expected). For example, for a 200 response, the API testing utility 30 determines that the dummy request has been successful. This is because a 200 response indicates that all operations were successful, and that all target endpoints provided the necessary data without issues. However, for 206 (Partial Response) responses, which indicate the API testing utility 30 determines that the dummy request has failed. This is because 206 is returned when multiple requests are made and at least one was unsuccessful.

For HTTP responses between 300-399, which are indicative of redirection, some responses are determined by the API testing utility 30 to mean that the dummy request has failed, whilst others to mean that the dummy request has succeeded. In particular, success is determined when the status code is 300 or 304, while failure is determined when the status code is 301, 302, 303, 307 or 308. Response codes 300 (Multiple Choices) and 304 (Not Modified) are acceptable as they allow client-side decision-making or efficient use of cached data, whereas 301, 302, 303, 307, and 308 involve redirections that can disrupt the request flow or result in unexpected behaviour. This is particularly undesirable for a cloud computing environment 10 that processes protected data as it may be indicative of data leakage.

For HTTP response codes between 400-499, which indicate client error response (i.e. a problem with API testing utility 30 and/or the part of the cloud computing environment 10, for example the domain 11 or processing engine 17, in which the API testing utility 30 is situated), some responses are determined by the API testing utility 30 to mean that the dummy request has failed, whilst others to mean that the dummy request has succeeded. Status codes 400 and 408 result in a success, whilst status codes 401, 403, 405, 406, and 407 result in failure. Success with status codes 400 (Bad Request) and 408 (Request Timeout) is possible if the sender of the API request is expected to handle errors by correcting input or retrying the request, while failure with 401 (Unauthorized), 403 (Forbidden), 405 (Method Not Allowed), 406 (Not Acceptable), and 407 (Proxy Authentication Required) occurs when the sender, in this case the API testing utility 30 lacks proper authentication or permission, or when the request method is not supported by the target endpoint. This ensures that the authentication and permissions have been set up correctly in the cloud computing environment 10, which is important to prevent unauthorised access to protected data. Status code 404 may result in failure or success. This is because status code 404 can mean that an application specific record for the resource URL is not found, in which case the API would still be considered successful by the API testing utility. However, status code 404 can also mean that the wrong requested URL is used, so here the API testing utility will return a failure outcome. Those domain who have api gateway in place if incorrect url is used then gateway returns 401, so they never get this

For HTTP responses between 500-599, which are indicative of server response (i.e. a problem with the target endpoint and/or the part of the cloud computing environment 10, for example the domain 11 or processing engine 17, in which it is situated), some responses are determined by the API testing utility 30 to mean that the dummy request has failed, whilst others to mean that the dummy request has succeeded. The dummy request is deemed to have succeeded when the status code is 500, 502, or 504, and failed when the status code is 505 or 503. Success with status codes 500 (Internal Server Error), 502 (Bad Gateway), or 504 (Gateway Timeout) indicates that the API testing utility 30 (or the part of the cloud computing environment 10 that it is situated) is able to handle temporary server issues by retrying or using fallbacks. Failure with 503 (Service Unavailable) and 505 (HTTP Version Not Supported) happens when the host of the target endpoint is down or incompatible with the request. Assuming that the target endpoint is not actually down (as would generally need to be the case in a cloud computing environment 10 that processes protected data), this indicates that API 70 has not been set up correctly.

An example (default) look-up table showing HTTP response status codes and possible results determined by the API testing utility 30 is as follows:

| **STATUS CODE DESCRIPTION** | **HTTP RESPONSE STATUS CODE** | **TESTING RESULT** |
|---|---|---|
| SUCCESSFUL RESPONSE | 2XX (Received, understood & accepted) | PASS |
| REDIRECTION | 300 (Multi Choice) | PASS |
| | 304 (Not Modified) | |
| REDIRECTION | 301 (Move Permanently) | FAIL |
| | 302 (Found) | |
| | 303 (See Other) | |
| | 307 (Temporary Redirect) | |
| | 308 (Permanent Redirect) | |
| CLIENT ERROR RESPONSES | 400 (Bad Request) | PASS |
| | 408 (Request Timeout) | |
| | 404 (Not Found: Application Record Not Found) | |
| CLIENT ERROR RESPONSES | 401 (Unauthorized Semantically Unauthenticated) | FAIL |
| | 403 (Forbidden: Identity Known no access to content) | |
| | 404 (Not Found: Incorrect URL) | |
| | 405 (Method not Allowed) | |
| | 406 (Not Acceptable) | |
| | 407 (Proxy Authentication Required) | |
| SERVER RESPONSE | 500 (Internal Service Error) | PASS |
| | 502 (Bad Gateway) | |
| | 504 (Gateway Timeout) | |
| SERVER RESPONSE | 505 (HTTP version not supported) | FAIL |
| | 503 (Service Unavailable) | |

As mentioned, this look-up table is editable and may be refined for each domain 11. For instance, a domain 11 may implement certain additional functionality that means the outcome is different. For example, when a domain implements an API gateway, a 401 response is returned instead of a 404 response when there is an incorrect URL.

Once the determination is made by the API testing utility 30 about whether the dummy request has passed or failed, a notification is sent to the developer to alert them to the result. The notification may be a success notification, or a failure notification, or a combination of both. For example, when multiple target endpoints are being tested, the API testing utility 30 may output a matrix containing the results for each endpoint. The status code may also be output to assist the developer in determining why a particular target endpoint has failed. In some implementations, a CloudWatch dashboard may be used to capture the determination made by the API testing utility 30. If any failure has occurred, then the dashboard then sets up a NetCool incident then alerts the developer via an alarm associated with the incident.

### Method of Deploying API Testing Utility

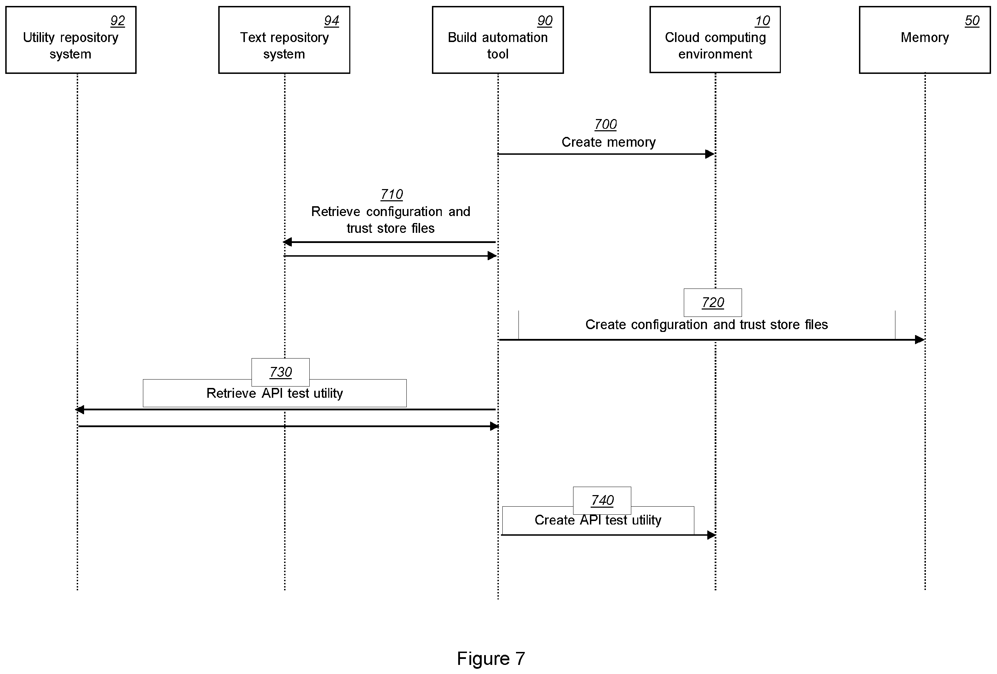

A method for deploying the API testing utility in cloud computing environment 10 is now described with reference to Figure 7. As shown in Figure 5B and Figure 7, when building and deploying the API testing utility 30 in the cloud computing environment 10, build automation too 90, text repository system 94 and utility repository system 92 are involved. Memory 50 is also invoked as part of the deployment method.

As shown in Figure 7, the method for deploying API testing utility 30 comprises the following steps: evoking build automation tool 90 to create a memory 50 in the cloud computing environment 10 (step 700); evoking the build automation tool 90 to create a trust store file 852 and a configuration file 851 in the memory 50, and the build automation tool 90 retrieving trust store file 852 and a configuration file 851 from a text repository system 94, and (steps 710 and 720); and the build automation tool 90 retrieving the API testing utility 30 from a utility repository 92 system and evoking build automation tool 90 to create API testing utility 30 in the cloud computing environment 10 (steps 730 and 740). Once the deployment method according to Figure 7 has been performed, the method of Figure 6 may then be performed.

Each of the steps of Figure 7 shall now be described in further detail.

Before deploying, an API testing utility is built, compiled and pushed to the utility repository system 92. The utility may be stored as a jar file. Additionally, the configuration file 851 and trust store file 852 are created and stored at the text repository system 94. When implemented in a domain 11 that has not implemented API testing utility 30 before, there may be additional steps to ensure appropriate credentials are set up for the credential manager system 42. In particular, the domain 11 may have a system user onboarded to the credential manager system 42.

In step 700, the build automation tool 90 is evoked to create a memory 50 in the cloud computing environment 10. In particular, a developer triggers a deployment task, such as a Jenkins job when using Jenkins as the build automation tool 90. The deployment task causes the creation of memory 50 within the cloud computing environment 10. For example, the memory 50 may be an S3 bucket created using AWS CloudFormation. The S3 bucket is given a default name such as {domain}-api-connection-utility-configs-{account-id}.

Next, in steps 710 and 720, the build automation tool 90 is evoked to create a trust store file 852 and a configuration file 851 in the memory 50 (steps 710 and 720). To do this, the developer may trigger another deployment task using the build automation tool 90, such as a further Jenkins job, or this may be triggered by the same deployment task as step 700. This causes the configuration file 851 and trust store file 852 to be retrieved (read) from the text repository system 94. Optionally, a URL to the appropriate location in the text repository system 94, for example a Git URL, may be used to fetch the configuration file 851 and the trust store file 852. The build automation tool 90 then deploys the configuration file 851 and the trust store file 852 to the memory 50. The configuration file 851 and trust store file are given default names such as api-connection-utility-config-{env}.json and trust-store- {env} . j ks.

In steps 730 and 740, the build automation tool 90 is evoked to create API testing utility 30 in the cloud computing environment 10. This involves the build automation tool 90 retrieving the API testing utility 30 from a utility repository system and creating the API testing utility 30 in the cloud computing environment 10 (steps 730 and 740). Again, the evocation may be caused by the developer triggering a deployment task (Jenkins job), the same or a different deployment task to those previously mentioned. This causes the build automation tool 90 to fetch the API testing utility 30 jar from the utility repository system 92. The utility jar is then deployed to an ECS server instance in the cloud computing environment 10. In some implementations, steps 730 and 740 may additionally involve building and deploying a docker image for the ECS server instance. In such implementations, the docker image is deployed to the ECS server instance. Different jobs within the build automation tool 90 may be provided for first building the docker image and second deploying the docker image.

Once the deployment method according to Figure 7 has been performed, the method of Figure 6 may then be performed.

### AWS Implementation

Whilst various Amazon Web Service (AWS) services and components have been referred to throughout, a complete implementation using AWS as the cloud computing environment 10 is provided in Figure 8.

All of the services and components found in Figure 8 have corresponding components in Figure 5A and/or Figure 5B. In particular, the cloud computing environment 10 corresponds to an AWS environment 810. API testing utility 30 is hosted in the AWS environment 810 using ECS instance 831. Memory 50 corresponds to S3 bucket 850. The configuration file 851 is stored in the S3 bucket as a JSON file. The trust store file is stored in the S3 bucket as a Java KeyStore file.

Credential manager system 42, authorisation token system 44, build automation tool 90, text repository system 94, and utility repository system 92 are the same as previously discussed. Using Jenkins for the build automation tool 90, Nexus for the utility repository system 92 and GitHub for the text repository system 94 allows deployment of the API testing utility 30 to the AWS environment 810.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A computer-implemented method for testing API connectivity in a cloud computing environment (10), wherein the cloud computing environment comprises an API testing utility (30) and a memory (50) communicatively coupled to the API testing utility, wherein the API testing utility is configured to send requests to and receive data from an API (70), and wherein the cloud computing environment is communicatively coupled to a credential manager system (42) and an authorisation token system (44), the method, at the API testing utility, comprising:
receiving (600, 605) request configuration data from the memory, wherein the request configuration data comprises authorisation configuration data and a target endpoint identifier;
retrieving (610, 620) credential data from the credential manager system based on the authorisation configuration data;
retrieving (630, 640) the authorisation token from the authorisation token system based on the credential data;
generating (650) a dummy request, based on the request configuration data, wherein the dummy request comprises the authorisation token;
sending (660) the dummy request to a target endpoint of the API based on the target endpoint identifier;
receiving (670) a status code from the API in response to the dummy request;
determining dummy request success based on the status code; and
if the status code indicates dummy request success, outputting (680) a success notification.

2. The method of claim 1, wherein the status code is indicative of successful response, redirection, client error response or server response.

3. The method of claim 2, wherein determining dummy request success based on the status code comprises determining dummy request success when the status code is indicative of successful response, or indicative of redirection, client error response or server response.

4. The method of claim 2, wherein determining dummy request success based on the status code comprises determining dummy request failure when the status code is indicative of redirection, client error response or server response.

5. The method of any preceding claim, wherein receiving a status code for the dummy request from the API comprises a HTTP response status code.

6. The method of claim 5, wherein determining dummy request success based on the status code comprises determining dummy request success when the HTTP response status code is any one of 200, 300, 304, 400, 408, 404, 500, 502, and 504.

7. The method of claim 5, wherein determining dummy request success based on the status code comprises determining dummy request failure when the HTTP response status code is any one of 206, 301, 302, 303, 307, 308, 401, 403, 404, 405, 406, 407, 505 and 503.

8. The method of any preceding claim, further comprising:
if the status code indicates dummy request failure, outputting (680) a failure notification, optionally outputting the status code.

9. The method of any preceding claim, wherein the memory comprises a configuration file (851), wherein receiving request configuration data from the memory comprises reading from the configuration file.

10. The method of any preceding claim, wherein the memory comprises a trust store file (852), wherein receiving request configuration data from the memory comprises reading from the trust store file.

11. The method of any preceding claim, wherein the target endpoint of the API (70) is within the cloud computing environment (10), optionally wherein the target endpoint is within a processing engine (17) or a domain (11) of the cloud computing environment.

12. The method of claim 11, wherein the target endpoint is a processing module, a database, or an event-driven data stream.

13. The method of any preceding claim, wherein testing API connectivity comprises testing a GET API request.

14. A cloud computing environment (10) comprising:
an API testing utility (30) configured to send requests to and receive data from an API and to perform the method of any preceding claim; and
a memory (50) communicatively coupled to the API testing utility, wherein the memory is configured to store request configuration data,
wherein the cloud computing environment is communicatively coupled to a credential manager system (42) and an authorisation token system (44).

15. A system comprising:
the cloud computing environment (10) of claim 14;
a credential manager system (42) communicatively coupled to the cloud computing environment; and
an authorisation token system (44) communicatively coupled to the cloud computing environment.

## Patentansprüche

1. Computerimplementiertes Verfahren zum Testen von API-Konnektivität in einer Cloud-Computing-Umgebung (10), wobei die Cloud-Computing-Umgebung ein API-Testdienstprogramm (30) und einen kommunikativ mit dem API-Testdienstprogramm gekoppelten Speicher (50) umfasst, wobei das API-Testdienstprogramm dazu ausgelegt ist, Anforderungen an eine API (70) zu senden und Daten von dieser zu empfangen, und wobei die Cloud-Computing-Umgebung kommunikativ mit einem Berechtigungsdatenverwaltungssystem (42) und einem Autorisierungstokensystem (44) gekoppelt ist, wobei das Verfahren an dem API-Testdienstprogramm Folgendes umfasst:
Empfangen (600, 605) von Anforderungskonfigurationsdaten von dem Speicher, wobei die Anforderungskonfigurationsdaten Autorisierungskonfigurationsdaten und eine Zielendpunktkennung umfassen;
Abrufen (610, 620) von Berechtigungsdaten aus dem Berechtigungsdatenverwaltungssystem basierend auf den Autorisierungskonfigurationsdaten;
Abrufen (630, 640) des Autorisierungstokens aus dem Autorisierungstokensystem basierend auf den Berechtigungsdaten;
Erzeugen (650) einer Dummy-Anforderung basierend auf den Anforderungskonfigurationsdaten, wobei die Dummy-Anforderung das Autorisierungstoken umfasst;
Senden (660) der Dummy-Anforderung an einen Zielendpunkt der API basierend auf der Zielendpunktkennung;
Empfangen (670) eines Statuscodes von der API als Reaktion auf die Dummy-Anforderung;
Bestimmen eines Dummy-Anforderungserfolgs basierend auf dem Statuscode; und,
wenn der Statuscode auf einen Dummy-Anforderungserfolg hinweist, Ausgeben (680) einer Erfolgsmeldung.

2. Verfahren nach Anspruch 1, wobei der Statuscode eine erfolgreiche Antwort, eine Umleitung, eine Client-Fehlerantwort oder eine Server-Antwort angibt.

3. Verfahren nach Anspruch 2, wobei das Bestimmen eines Dummy-Anforderungserfolgs basierend auf dem Statuscode das Bestimmen eines Dummy-Anforderungserfolgs umfasst, wenn der Statuscode eine erfolgreiche Antwort angibt oder eine Umleitung, eine Client-Fehlerantwort oder eine Server-Antwort angibt.

4. Verfahren nach Anspruch 2, wobei das Bestimmen eines Dummy-Anforderungserfolgs basierend auf dem Statuscode das Bestimmen eines Dummy-Anforderungsmisserfolgs umfasst, wenn der Statuscode eine Umleitung, eine Client-Fehlerantwort oder eine Server-Antwort angibt.

5. Verfahren nach einem der vorhergehenden Ansprüche, wobei das Empfangen eines Statuscodes für die Dummy-Anforderung von der API einen HTTP-Antwortstatuscode umfasst.

6. Verfahren nach Anspruch 5, wobei das Bestimmen eines Dummy-Anforderungserfolgs basierend auf dem Statuscode das Bestimmen eines Dummy-Anforderungserfolgs umfasst, wenn der HTTP-Antwortstatuscode einer der Statuscodes 200, 300, 304, 400, 408, 404, 500, 502 und 504 ist.

7. Verfahren nach Anspruch 5, wobei das Bestimmen eines Dummy-Anforderungserfolgs basierend auf dem Statuscode das Bestimmen eines Dummy-Anforderungsmisserfolgs umfasst, wenn der HTTP-Antwortstatuscode einer der Statuscodes 206, 301, 302, 303, 307, 308, 401, 403, 404, 405, 406, 407, 505 und 503 ist.

8. Verfahren nach einem der vorhergehenden Ansprüche, ferner umfassend:
wenn der Statuscode auf einen Dummy-Anforderungsmisserfolg hinweist, Ausgeben (680) einer Misserfolgsmeldung, optional Ausgeben des Statuscodes.

9. Verfahren nach einem der vorhergehenden Ansprüche, wobei der Speicher eine Konfigurationsdatei (851) umfasst, wobei das Empfangen von Anforderungskonfigurationsdaten von dem Speicher das Auslesen aus der Konfigurationsdatei umfasst.

10. Verfahren nach einem der vorhergehenden Ansprüche, wobei der Speicher eine Truststore-Datei (852) umfasst, wobei das Empfangen von Anforderungskonfigurationsdaten von dem Speicher das Auslesen aus der Truststore-Datei umfasst.

11. Verfahren nach einem der vorhergehenden Ansprüche, wobei sich der Zielendpunkt der API (70) innerhalb der Cloud-Computing-Umgebung (10) befindet, wobei sich der Zielendpunkt optional innerhalb einer Verarbeitungs-Engine (17) oder einer Domäne (11) der Cloud-Computing-Umgebung befindet.

12. Verfahren nach Anspruch 11, wobei der Zielendpunkt ein Verarbeitungsmodul, eine Datenbank oder ein ereignisgesteuerter Datenstrom ist.

13. Verfahren nach einem der vorhergehenden Ansprüche, wobei das Testen von API-Konnektivität das Testen einer GET-API-Anforderung umfasst.

14. Cloud-Computing-Umgebung (10), umfassend:
ein API-Testdienstprogramm (30), das dazu ausgelegt ist, Anforderungen an eine API zu senden und Daten von dieser zu empfangen und das Verfahren nach einem der vorhergehenden Ansprüche durchzuführen; und
einen Speicher (50), der kommunikativ mit dem API-Testdienstprogramm gekoppelt ist, wobei der Speicher dazu ausgelegt ist, Anforderungskonfigurationsdaten zu speichern,
wobei die Cloud-Computing-Umgebung kommunikativ mit einem Berechtigungsdatenverwaltungssystem (42) und einem Autorisierungstokensystem (44) gekoppelt ist.

15. System, umfassend:
die Cloud-Computing-Umgebung (10) nach Anspruch 14;
ein Berechtigungsdatenverwaltungssystem (42), das kommunikativ mit der Cloud-Computing-Umgebung gekoppelt ist; und
ein Autorisierungstokensystem (44), das kommunikativ mit der Cloud-Computing-Umgebung gekoppelt ist.

## Revendications

1. Procédé mis en œuvre par ordinateur pour tester la connectivité d'API dans un environnement informatique en nuage (10), dans lequel l'environnement informatique en nuage comprend un utilitaire de test d'API (30) et une mémoire (50) couplée de manière communicante à l'utilitaire de test d'API, dans lequel l'utilitaire de test d'API est configuré pour envoyer des demandes à et recevoir des données provenant d'une API (70), et dans lequel l'environnement informatique en nuage est couplé de manière communicative à un système (42) gestionnaire d'autorisations et un système (44) de jetons d'autorisation, le procédé, au niveau de l'utilitaire de test API, comprenant :
la réception (600, 605) de données de configuration de requête en provenance de la mémoire, les données de configuration de requête comprenant des données de configuration d'autorisation et un identifiant de point d'extrémité cible ;
la récupération (610, 620) de données de justificatifs d'identification auprès du système gestionnaire de justificatifs d'identification sur la base des données de configuration d'autorisation ;
la récupération (630, 640) du jeton d'autorisation auprès du système de jetons d'autorisation sur la base des données de justificatifs d'identification ;
la génération (650) d'une requête fictive, sur la base des données de configuration de requête, la requête fictive comprenant le jeton d'autorisation ;
l'envoi (660) de la requête fictive à un point d'extrémité cible de l'API sur la base de l'identifiant de point d'extrémité cible ;
la réception (670) d'un code de statut en provenance de l'API en réponse à la demande fictive ;
la détermination du succès de la demande fictive sur la base du code de statut ; et
si le code de statut indique la réussite de la demande fictive, l'émission (680) d'une notification de réussite.

2. Procédé selon la revendication 1, dans lequel le code de statut indique une réponse réussie, une redirection, une réponse d'erreur client ou une réponse serveur.

3. Procédé selon la revendication 2, dans lequel la détermination du succès de la requête fictive sur la base du code de statut comprend la détermination du succès de la requête fictive lorsque le code de statut indique une réponse réussie, ou indique une redirection, une réponse d'erreur client ou une réponse serveur.

4. Procédé selon la revendication 2, dans lequel la détermination du succès de la requête fictive sur la base du code de statut comprend la détermination d'un échec de la requête fictive lorsque le code de statut indique une redirection, une réponse d'erreur client ou une réponse serveur.

5. Procédé selon l'une quelconque des revendications précédentes, dans lequel la réception d'un code de statut pour la requête fictive en provenance de l'API comprend un code de statut de réponse HTTP.

6. Procédé selon la revendication 5, dans lequel la détermination du succès de la requête fictive sur la base du code de statut comprend la détermination du succès de la requête fictive lorsque le code d'état de réponse HTTP est l'un quelconque parmi 200, 300, 304, 400, 408, 404, 500, 502 et 504.

7. Procédé selon la revendication 5, dans lequel la détermination du succès de la requête fictive sur la base du code de statut comprend la détermination d'un échec de la requête fictive lorsque le code de statut de réponse HTTP est l'un quelconque parmi 206, 301, 302, 303, 307, 308, 401, 403, 404, 405, 406, 407, 505 et 503.

8. Procédé selon l'une quelconque des revendications précédentes, comprenant en outre :
si le code de statut indique un échec de la demande fictive, l'émission (680) d'une notification d'échec, l'émission facultative du code de statut.

9. Procédé selon l'une quelconque des revendications précédentes, dans lequel la mémoire comprend un fichier de configuration (851), dans lequel la réception de données de configuration de requête à partir de la mémoire comprend la lecture à partir du fichier de configuration.

10. Procédé selon l'une quelconque des revendications précédentes, dans lequel la mémoire comprend un fichier de stockage de confiance (852), dans lequel la réception de données de configuration de requête en provenance de la mémoire comprend la lecture à partir du fichier de stockage de confiance.

11. Procédé selon l'une quelconque des revendications précédentes, dans lequel le point d'extrémité cible de l'API (70) se trouve à l'intérieur de l'environnement informatique en nuage (10), dans lequel, éventuellement, le point d'extrémité cible se trouve à l'intérieur d'un moteur de traitement (17) ou d'un domaine (11) de l'environnement informatique en nuage.

12. Procédé selon la revendication 11, dans lequel le point d'extrémité cible est un module de traitement, une base de données ou un flux de données piloté par événement.

13. Procédé selon l'une quelconque des revendications précédentes, dans lequel le test de la connectivité API comprend le test d'une requête GET API.

14. Environnement informatique en nuage (10) comprenant :
un utilitaire de test d'API (30) configuré pour envoyer des requêtes à et recevoir des données en provenance d'une API et pour exécuter le procédé selon l'une quelconque des revendications précédentes ; et
une mémoire (50) couplée de manière communicative à l'utilitaire de test API, laquelle mémoire est configurée pour stocker des données de configuration de requête,
dans lequel l'environnement informatique en nuage est couplé de manière communicative à un système de gestion de justificatifs d'identité (42) et à un système de jeton d'autorisation (44).

15. Système comprenant :
l'environnement d'informatique en nuage (10) selon la revendication 14 ;
un système de gestion de justificatifs d'identité (42) couplé de manière communicative à l'environnement informatique en nuage ; et
un système de jeton d'autorisation (44) couplé de manière communicative à l'environnement informatique en nuage.
